(19) **Europäisches Patentamt European Patent Office Office européen des brevets**

(11) **EP 4 216 117 B1**

(12) **EUROPEAN PATENT SPECIFICATION**

(45) Date of publication and mention
of the grant of the patent:
**31.01.2024 Bulletin 2024/05**

(51) International Patent Classification (IPC):
*G06Q 10/04* (2023.01)    *G06F 30/27* (2020.01)
*G06F 30/28* (2020.01)    *G06N 3/044* (2023.01)
*G06N 3/08* (2023.01)    *G06Q 50/06* (2024.01)
*G06F 111/10* (2020.01)    *G06N 3/0442* (2023.01)

(21) Application number: **22206851.2**

(22) Date of filing: **11.11.2022**

(52) Cooperative Patent Classification (CPC):
**G06Q 50/06; G06F 30/27; G06F 30/28;
G06N 3/0442; G06N 3/08; G06Q 10/04;**
G06F 2111/10; Y02A 10/40

(54) **METHOD AND APPARATUS FOR TRAINING WATER-AND-SEDIMENT PREDICTION MODEL FOR RESERVOIR AND METHOD AND APPARATUS FOR PREDICTING WATER-AND-SEDIMENT IN RESERVOIR**

VERFAHREN UND VORRICHTUNG ZUM TRAINIEREN EINES WASSER- UND SEDIERUNGSVORHERSAGEMODELLS FÜR EIN RESERVOIR UND VERFAHREN UND VORRICHTUNG ZUR VORHERSAGE VON WASSER- UND SEDIERUNG IN EINEM RESERVOIR

PROCÉDÉ ET APPAREIL D'ENTRAÎNEMENT DE MODÈLE DE PRÉDICTION D'EAU ET DE SÉDIMENT POUR RÉSERVOIR ET PROCÉDÉ ET APPAREIL DE PRÉDICTION D'EAU ET DE SÉDIMENT DANS RÉSERVOIR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **21.01.2022 CN 202210069016**

(43) Date of publication of application:
**26.07.2023 Bulletin 2023/30**

(73) Proprietor: **China Three Gorges Co., Ltd.
Wuhan Hubei 430010 (CN)**

(72) Inventors:
• **ZHANG, Chengxiao**
**Wuhan, 430010 (CN)**
• **DAI, Huichao**
**Wuhan, 430010 (CN)**
• **WANG, Lingling**
**Wuhan, 430010 (CN)**
• **LIU, Zhiwu**
**Wuhan, 430010 (CN)**
• **JIANG, Dingguo**
**Wuhan, 430010 (CN)**
• **ZHAO, Hanqing**
**Wuhan, 430010 (CN)**
• **MI, Boyu**
**Wuhan, 430010 (CN)**
• **LIU, Xiaoting**
**Wuhan, 430010 (CN)**

(74) Representative: **J A Kemp LLP
80 Turnmill Street
London EC1M 5QU (GB)**

(56) References cited:
**CN-A- 114 091 359**

• **MANSOUR TALEBIZADEH ET AL: "Uncertainty Analysis in Sediment Load Modeling Using ANN and SWAT Model", WATER RESOURCES MANAGEMENT ; AN INTERNATIONAL JOURNAL - PUBLISHED FOR THE EUROPEAN WATER RESOURCES ASSOCIATION (EWRA), KLUWER ACADEMIC PUBLISHERS, DO, vol. 24, no. 9, 30 October 2009 (2009-10-30), pages 1747-1761, XP019832327, ISSN: 1573-1761**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to the field of reservoir sediment regulation technologies, and specifically to a method and an apparatus for training a water-and-sediment prediction model for a reservoir and a method for predicting water-and-sediment in a reservoir.

### BACKGROUND

Reservoirs are a key type of water conservancy projects for achieving scientific allocation and sustainable utilization of water resources, and the regulation method and service life of reservoirs profoundly affect the safety of people's life and property and the development of economy and society. However, it is well known that under the strong influence of the artificial factor of reservoir regulation, the movement characteristics of water flow, sediment, and other materials in natural rivers change in a drastic and complex way. With the rapid development of industry and agriculture in a reservoir region and the rapid growth of population, real-time and fine regulation of a reservoir is becoming more and more critical. It is especially important to quickly and accurately simulate and recognize the movement patterns of water flow and sediment that are about to occur at various on-way locations in a reservoir region under the premise that flood peaks and sediment peaks are observed upstream or in the reservoir region.

To predict the water flow and sediment data at various on-way locations, a neural network model is usually used for prediction in a conventional method. Before the neural network model is used for prediction, the neural network model needs to be trained by using measured data as training data. However, for on-way regions without observation stations, the actually-measured data cannot be obtained, and therefore training data cannot be obtained, making it difficult to train the neural network model. As a result, the neural network model trained by using a conventional neural network model training method cannot predict water flow and sediment data in on-way regions without observation stations.

Uncertainty Analysis in Sediment Load Modeling Using ANN and SWAT Model by Mansour Talebizadeh et al, Water Resour Manage (2010) 24:1747-1761 discloses a uncertainty analysis in sediment load modeling using ANN and SWAT Model. In Talebizadeh *et al*, the performance of two types of different models, namely ANN and SWAT models along their corresponding uncertainties in simulating sediment load were investigated. For determining the type and number of inputs for the ANN model, three scenarios were considered and it was shown that in the small and forested watershed of Kasilian, neither the inclusion of daily precipitation nor the preceded discharge values would improve the performance of ANN model in the estimation of sediment load, and only the discharge value of the present day is the most effective factor in estimating the sediment load. After calibrating SWAT for the monthly observed values of flow and sediment through the application of SUFI2 procedure, results indicated that SWAT has a better performance in estimating high values of sediment, whereas ANN estimated low and medium values of sediment more accurately. Moreover corresponding p-factor and d-factor of the results of two models, suggests that the uncertainty in the results of ANN is less than the uncertainty in SWAT results (smaller d-factor), and the percentage of observed sediment loads bracketed by the 95PPU in the ANN model is higher than those bracketed by the corresponding 95PPU of SWAT results which was produced through the SUFI2 procedure.

### SUMMARY

Therefore, a technical problem to be resolved by the present invention is to overcome the defect in the prior art that water flow and sediment data in on-way regions without observation stations cannot be predicted, and provide a method and an apparatus for training a water-and-sediment prediction model for a reservoir and a method and an apparatus for predicting water-and-sediment in a reservoir.

According to the present invention, a method for training a water-and-sediment prediction model for a reservoir is provided as defined in claim 1. A method for predicting water-and-sediment in a reservoir is defined in claim 4. An apparatus for training a water-and-sediment prediction model for a reservoir is defined in claim 5. A computer-readable storage medium is defined in claim 6.

Optional features are defined in the dependent claims.

The technical solution in the present invention has the following advantages:

1. For the method and apparatus for training a water-and-sediment prediction model for a reservoir provided in the present invention, inbound water flow data is first inputted into a preestablished mathematical model, to obtain water-and-sediment data of a target region, and then the inbound water flow data and the water-and-sediment data of the target region are used as training data to train an initial neural network model, to obtain a water-and-sediment prediction model of the target region. The mathematical model is established according to historical actually-measured data collected by an upstream water inflow observation station and a downstream observation station. The mathematical model is based on strict physical law. Water-and-sediment data of any region can be obtained through simulation by using the mathematical model. In this way, the water-and-sediment prediction model obtained through training by using the inbound water flow data and the water-and-sediment data that is obtained by using the mathematical model as training data, thereby achieving independence from the actual measurement of on-way stations in the target region. Further, because a neural network model has a robust fitting expression ability for a change process of nonlinear, multi-component data, and an output result can be rapidly and appropriately given after training with training data. For the method and apparatus for training a water-and-sediment prediction model for a reservoir provided in the present invention, a mathematical model and a neural network model are combined, so that water-and-sediment data of any target region can be predicted rapidly and in time, to provide important reference for the real-time and fine regulation of a reservoir.

2. For the method and apparatus for predicting water-and-sediment in a reservoir provided in the present invention, after real-time data collected by an upstream water inflow observation station is acquired, the real-time data is inputted into a pretrained water-and-sediment prediction model, to obtain predicted water-and-sediment data in a target region, where the water-and-sediment prediction model is obtained through training by using the method for training a water-and-sediment prediction model for a reservoir provided in the first aspect of the present invention. During the training of a water-and-sediment prediction model, inbound water flow data is first inputted into a preestablished mathematical model, to obtain water-and-sediment data of a target region, and then the inbound water flow data and the water-and-sediment data of the target region are used as training data to train an initial neural network model, to obtain a water-and-sediment prediction model of the target region. The mathematical model is established according to historical actually-measured data collected by an upstream water inflow observation station and a downstream observation station. The mathematical model is based on strict physical law. Water-and-sediment data of any region can be obtained through simulation by using the mathematical model. In this way, the water-and-sediment prediction model obtained through training by using the inbound water flow data and the water-and-sediment data that is obtained by using the mathematical model as training data, thereby achieving independence from the actual measurement of on-way stations in a reservoir region. Further, because a neural network model has a robust fitting expression ability for a change process of nonlinear, multi-component data, and an output result can be rapidly and appropriately given after training with training data. A water-and-sediment prediction model is obtained through training by using the method for training a water-and-sediment prediction model for a reservoir provided in the first aspect of the present invention, so that water-and-sediment data of any target region can be predicted rapidly and in time, to provide important reference for the real-time and fine regulation of a reservoir. Therefore, through the method and apparatus for predicting water-and-sediment in a reservoir provided in the present invention, water-and-sediment data of any target region can be predicted rapidly and in time.

## BRIEF DESCRIPTION OF THE DRAWING

To describe the technical solutions in specific embodiments of the present invention or the prior art more clearly, the following briefly introduces the accompanying drawings required for describing the specific embodiments or the prior art. Apparently, the accompanying drawings in the following description show some embodiments of the present invention, and a person of ordinary skill in the art may still derive other drawings from these accompanying drawings without creative efforts.

FIG. 1 is a flowchart of a specific example of a method for training a water-and-sediment prediction model for a reservoir according to an embodiment of the present invention;
FIG. 2 is a schematic framework diagram of a long short-term memory (LSTM)-based deep learning model according to an embodiment of the present invention;
FIG. 3 is a schematic diagram of a process in which actually-measured water-and-sediment enter a reservoir of a riverway-type reservoir in a typical year according to an embodiment of the present invention;
FIG. 4 shows comparison results of a water level, a flow rate, and a true value obtained through prediction by using a water-and-sediment prediction model according to an embodiment of the present invention;
FIG. 5 shows comparison results of sediment content and a true value obtained through prediction by using a water-and-sediment prediction model according to an embodiment of the present invention;
FIG. 6 is a flowchart of a specific example of a method for predicting water-and-sediment in a reservoir according to an embodiment of the present invention;
FIG. 7 is a principle block diagram of a specific example of an apparatus for training a water-and-sediment prediction model for a reservoir according to an embodiment of the present invention;
FIG. 8 is a principle block diagram of a specific example of an apparatus for predicting water-and-sediment in a reservoir according to an embodiment of the present invention; and
FIG. 9 is a principle block diagram of a specific example of a computer device according to an embodiment of the present invention.

## DETAILED DESCRIPTION OF THE EMBODIMENTS

The following clearly and completely describes the technical solutions of the present invention with reference to the accompanying drawings. Apparently, the described embodiments are merely some rather than all of the embodiments of the present invention. All other embodiments obtained by a person of ordinary skill in the art based on the embodiments of the present invention without creative efforts shall fall within the protection scope of the present invention.

In the description of the present invention, it needs to be noted that the technical features involved in different embodiments of the present invention described below can be combined with each other as long as they do not constitute a conflict between them.

To predict the water flow and sediment data at various on-way locations, a neural network model is usually used for prediction in a conventional method. Before the neural network model is used for prediction, the neural network model needs to be trained by using measured data as training data. However, for on-way regions without observation stations, the actually-measured data cannot be obtained, and therefore training data cannot be obtained, making it difficult to train the neural network model. As a result, the neural network model trained by using a conventional neural network model training method cannot predict water flow and sediment data in on-way regions without observation stations.

The simulation of water flow and sediment data in different on-way regions can be implemented by establishing a mathematical model. However, during the simulation of real-time, sudden hydrodynamics or substance transport, established model parameters of the mathematical model usually need to be adjusted to obtain an appropriate simulation result. In addition, the mathematical model inevitably has problems of high calculation costs and long calculation time consumption, lacking timeliness. Therefore, the sole application of a mathematical model to predict water-and-sediment and water quality in a reservoir region can hardly meet immediate regulation requirements of reservoir regulation departments.

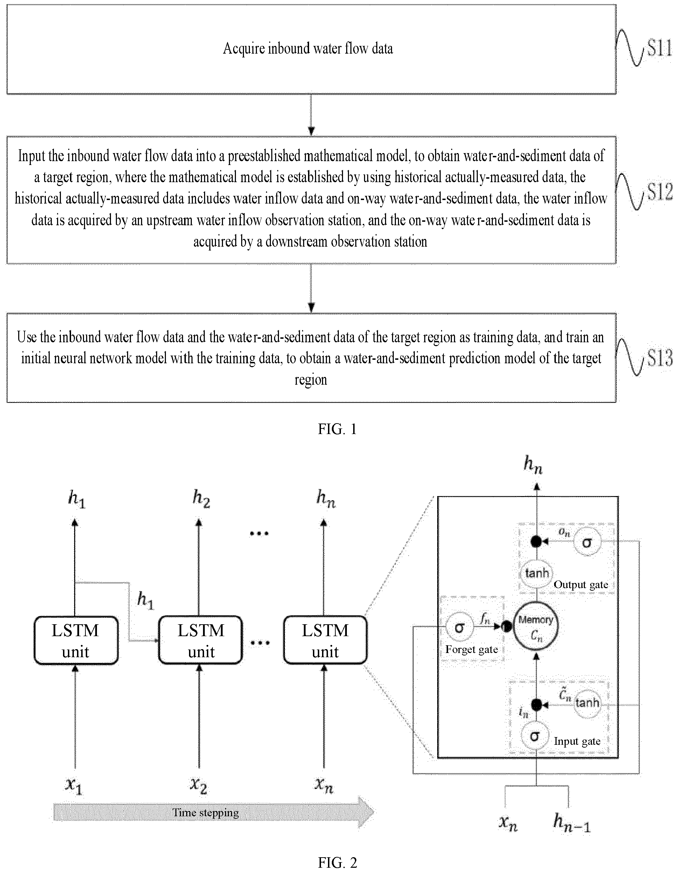

An embodiment of the present invention provides a method for training a water-and-sediment prediction model for a reservoir is provided. As shown in FIG. 1, the method includes the following steps.

Step S11: Acquire inbound water flow data.

In an optional embodiment, inbound water flow data is determined by using water inflow data in historical actually-measured data. The water inflow data includes water flow data collected by an inbound control station and water flow data collected at an on-way main tributary inlet of a reservoir region.

Step S12: Input the inbound water flow data into a preestablished mathematical model, to obtain water-and-sediment data of a target region, where the mathematical model is established by using historical actually-measured data, the historical actually-measured data includes water inflow data and on-way water-and-sediment data, the water inflow data is acquired by an upstream water inflow observation station, and the on-way water-and-sediment data is acquired by a downstream observation station.

In the embodiments of the present invention, a mathematical model is established by using the water inflow data acquired by the upstream water inflow observation station and the on-way water-and-sediment data acquired by the downstream observation station. After the mathematical model is rated and verified, the mathematical model may simulate a water-and-sediment transport process between the upstream water inflow observation station and the downstream observation station, so that water-and-sediment data in any on-way region between the upstream water inflow observation station and the downstream observation station may be simulated by using the mathematical model. Through the embodiments of the present invention, even if no observation station is arranged within a target region, water-and-sediment data of the target region can be acquired.

In an optional embodiment, during the establishment of a mathematical model for a research region, upstream boundaries and downstream boundaries of a reservoir end and a tributary are arranged at positions with actually-measured flow rate data. The downstream boundaries are arranged at pre-dam positions with actually-measured flow rate data, and a pre-dam actually-measured water level process is given.

In an optional embodiment, the water-and-sediment data includes a hydrodynamic indicator and a sediment indicator.

Step S13: Use the inbound water flow data and the water-and-sediment data of the target region as training data, and train an initial neural network model with the training data, to obtain a water-and-sediment prediction model of the target region.

For the method for training a water-and-sediment prediction model for a reservoir provided in the embodiments of the present invention, inbound water flow data is first inputted into a preestablished mathematical model, to obtain water-and-sediment data of a target region, and then the inbound water flow data and the water-and-sediment data of the target region are used as training data to train an initial neural network model, to obtain a water-and-sediment prediction model of the target region. The mathematical model is established according to historical actually-measured data collected by an upstream water inflow observation station and a downstream observation station. The mathematical model is based on strict physical law. Water-and-sediment data of any region can be obtained through simulation by using the mathematical model. In this way, the water-and-sediment prediction model obtained through training by using the inbound water flow data and the water-and-sediment data that is obtained by using the mathematical model as training data, thereby achieving independence from the actual measurement of on-way stations in a reservoir region. Further, because a neural network model has a robust fitting expression ability for a change process of nonlinear, multi-component data, and an output result can be rapidly and appropriately given after training with training data. For the method for training a water-and-sediment prediction model for a reservoir provided in the embodiments of the present invention, a mathematical model and a neural network model are combined, so that water-and-sediment data of any target region can be predicted rapidly and in time, to provide important reference for the real-time and fine regulation of a reservoir.

In an optional embodiment, step S11 specifically includes:

First, sampled water inflow data collected by the upstream water inflow observation station within a reference period is acquired. The reference period includes a wet year, a normal year, and a dry year.

Next, the sampled water inflow data is scaled, to obtain the inbound water flow data.

In an optional embodiment, the sampled water inflow data may be scaled in different orders of magnitude, to obtain the inbound water flow data. For example, the sampled water inflow data may be scaled by 0.5 times to 1.5 times, to obtain the inbound water flow data.

In an optional embodiment, water inflow data in a wet year, a normal year, and a dry year vary greatly. Sampled water inflow data in a wet year, a normal year, and a dry year are scaled, so that more comprehensive water inflow data can be obtained. In this way, the scaled sampled water inflow data is inputted into the mathematical model, to obtain the on-way movement patterns of sediment in various cases that may occur in a reservoir region of a reservoir. A water-and-sediment prediction model trained by using the water-and-sediment data outputted by the mathematical model and the scaled sampled water inflow data as training data can predict the hydrodynamic indicator and the sediment indicator in various cases.

In an optional embodiment, the mathematical model includes a hydrodynamic model, and the water-and-sediment data includes a cross-sectional water level and a cross-sectional flow rate of the target region. When the water-and-sediment data includes a cross-sectional water level and a cross-sectional flow rate of the target region, the trained water-and-sediment prediction model may also be used for predicting the cross-sectional water level and the cross-sectional flow rate of the target region.

The hydrodynamic model is:

$$\frac{\partial Q}{\partial x} + B_T \frac{\partial Z}{\partial t} = q,$$

$$\frac{\partial Q}{\partial t} + \frac{\partial}{\partial x}(\alpha \frac{Q^2}{A}) + gA\frac{\partial Z}{\partial x} + g\frac{|Q|Q}{c^2 AR} = 0,$$

where x represents a longitudinal coordinate of the target region in a riverway, t represents a time interval between two adjacent times of detection, Q represents the cross-sectional flow rate of the target region, Z represents the cross-sectional water level of the target region, BT represents an equivalent river width of the target region, an equivalent river width is equal to a river width and an additional mudflat width, q represents a side inflow rate of a unit river length, $\alpha$ represents a hydrodynamic correction coefficient, A represents a cross-sectional area of the target region, g represents gravitational acceleration, C represents the Chézy coefficient, and R represents a hydraulic radius of the target region.

In an optional embodiment, a finite difference method or a finite volume method may be selected to discretize the hydrodynamic model. A Preissman implicit scheme solving method is selected to solve the cross-sectional water level and the cross-sectional flow rate of the target region.

In an optional embodiment, in an actual application scenario, water inflow data may be monitored in real time by using an upstream observation station, and water-and-sediment data of a downstream on-way target region may be periodically predicted according to detected water inflow data. "t" in the hydrodynamic model represents a time interval between two times of detection. For example, the value of t may be 10 s. The equivalent river width and the hydraulic radius may be calculated by using data obtained through prediction in a previous period.

In an optional embodiment, if suspended load in the target region accounts for a large proportion in complete sediment, a mathematical model of the target region further includes a suspended load sediment value model. The water-and-sediment data further includes cross-sectional sediment content of different particle size groups of sediment within the target region. When the water-and-sediment data includes cross-sectional sediment content of different particle size groups of sediment within the target region, the trained water-and-sediment prediction model may also be used for predicting the cross-sectional sediment content of different particle size groups of sediment within the target region.

The suspended load sediment value model includes:

a transport control equation of suspended load: $\dfrac{\partial QS_k}{\partial x} + \dfrac{\partial AS_k}{\partial t} + \alpha_k \omega_k B_T (S_k - S_{*k}) = 0$ ,

an equation of riverbed scouring-and-deposition deformation caused by the suspended load:

$$\rho' \frac{\partial A_s}{\partial t} = \alpha_k \omega_k B_T (S_k - S_{*k})$$ ,

where Q represents the cross-sectional flow rate of the target region, $S_k$ represents cross-sectional sediment content of a kth particle size group of sediment within the target region, x represents the longitudinal coordinate of the target region in the riverway, A represents the cross-sectional area of the target region, $A_s$ represents a scouring and deposition area of the target region, $S_{*k}$ represents cross-sectional sediment carrying capacity of the kth particle size group of sediment within the target region, $W_k$ and $\alpha_k$ respectively represent settling velocity and a saturation-recovering coefficient of the kth particle size group of sediment, $\rho'$ represents dry bulk density of the sediment, and $B_T$ represents the equivalent river width of the target region.

In an optional embodiment, if bed load in the target region accounts for a large proportion in complete sediment, a mathematical model of the target region further includes a bed load sediment value model. The water-and-sediment data further includes a sediment transport rate of the target region. When the water-and-sediment data includes the sediment transport rate of the target region, the trained water-and-sediment prediction model may also be used for predicting the sediment transport rate of the target region.

The bed load sediment value model includes:

a transport control equation of bed load: $G_b = G_b (U, Z, d, \cdots)$,

an equation of riverbed scouring-and-deposition deformation caused by the bed load: $\dfrac{\partial (G_b)}{\partial x} + \dfrac{\partial (\rho' A_b)}{\partial t} = 0$ ,

where $G_b$ represents a sediment transport rate (kg/s) of the bed load, U represents cross-sectional average flow velocity within the target region, Z represents the cross-sectional water level of the target region, d represents a particle size of the sediment, x represents the longitudinal coordinate of the target region in the riverway, t represents the time interval between two adjacent times of detection, $\rho'$ represents the dry bulk density of the sediment, and $A_b$ represents the scouring and deposition area of the target region.

In an optional embodiment, $G_b$ needs to be obtained by inputting the water level and the flow rate obtained by the hydrodynamic model into an empirical formula or an empirical curve.

A conventional explicit solving method is used for a suspended load sediment transport equation and a bed load sediment transport equation to solve a sediment control equation, to obtain the sediment content or sediment transport rate of the cross sections and particle size groups of sediment.

In an optional embodiment, the equation of riverbed scouring-and-deposition deformation caused by the suspended load and the equation of riverbed scouring-and-deposition deformation caused by the bed load are discretely solved by using an explicit mode.

In an optional embodiment, the initial neural network model is an LSTM-based deep learning model. The architecture of the LSTM-based deep learning model shown in FIG. 2 is established by using the following steps:

(1) An input layer of the deep learning model is defined, to randomly initialize variable parameters.

(2) In the LSTM-based deep learning model, 16/32/64/128 hidden-layer neurons are given, and 1/2/3 neural layers are respectively set, to establish the architecture of the deep learning model.

(3) An output layer of the deep learning model is defined. A mean square deviation function is selected as a fitting standard. An Adam algorithm is used as a deep learning gradient correction algorithm. An exponentially decaying learning rate change is set.

(4) A classic, standard data set is selected to test the generalization of the deep learning model. A quantity of hidden layers and a quantity of neurons of the deep learning model are initially set.

In an optional embodiment, the initial neural network model includes an input layer and an output layer. Dimension of the input layer is determined according to a quantity of the upstream water inflow observation stations. Dimension of the output layer is determined according to a quantity of the target regions.

In an optional embodiment, the dimension of the input layer is the same as a quantity of upstream water inflow observation stations. The dimension of the output layer is the same as a quantity of target regions.

In an optional embodiment, during the training of the initial neural network model, the training data obtained in step S12 are grouped and divided into batches, and an iteration cycle of a training data set in the deep learning model is set, and the training data is inputted into the initial neural network model to perform model training.

In an optional embodiment, a typical water and sediment entry process at an upstream reservoir end with actually-measured data is inputted into the trained model. A water and sediment process change along the way to a pre-dam in a reservoir region is inputted. Comparison is made to the actually-measured data to verify the generalization and prediction capability of the model.

To verify that the water-and-sediment prediction model obtained through training by using the method for training a water-and-sediment prediction model for a reservoir provided in the embodiments of the present invention can implement rapid and accurate prediction of a hydrodynamic indicator and a sediment indicator of the target region, in the embodiments of the present invention, the water-and-sediment prediction model obtained through training in the foregoing embodiments is verified:

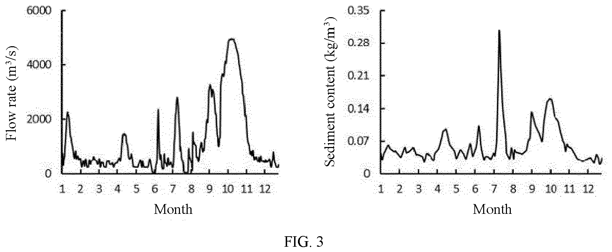

FIG. 3 shows a process in which actually-measured water-and-sediment enter a reservoir of a riverway-type reservoir in a typical year. Table 1 below shows distances between on-way stations and an inbound control station.

Table 1

| Station name | Distance (km) | Station name | Distance (km) | Station name | Distance (km) |
|---|---|---|---|---|---|
| Station A | 30 | Station C | 92 | Station E | 151 |
| Station B | 73 | Station D | 98 | Station F | 173 |

To verify that the water-and-sediment prediction model obtained through training in the foregoing embodiments can implement accurate prediction of on-way flow rate, water level, and sediment content, in the embodiments of the present invention, flow rate, water level, and sediment content at the stations are predicted by using the water-and-sediment prediction model obtained through training by using the foregoing embodiments, and prediction results are compared with true values detected at the stations.

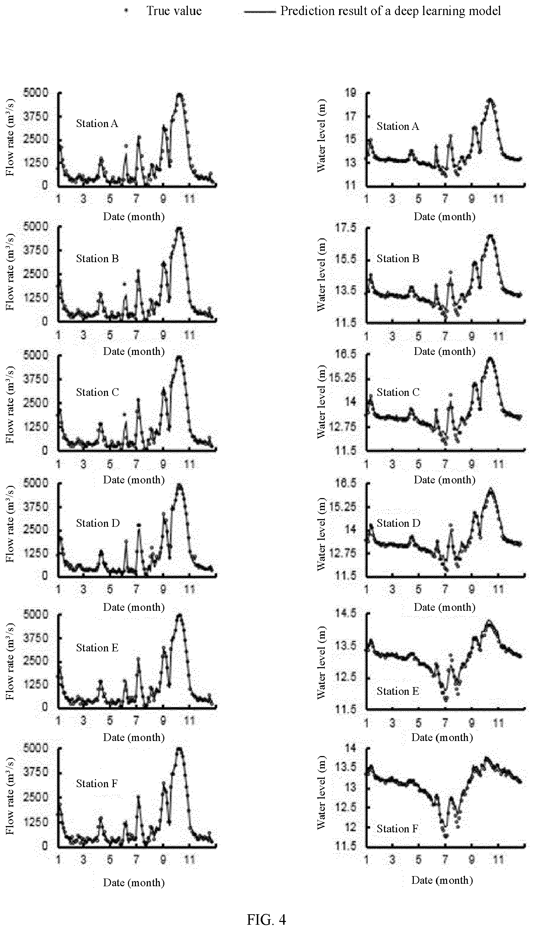

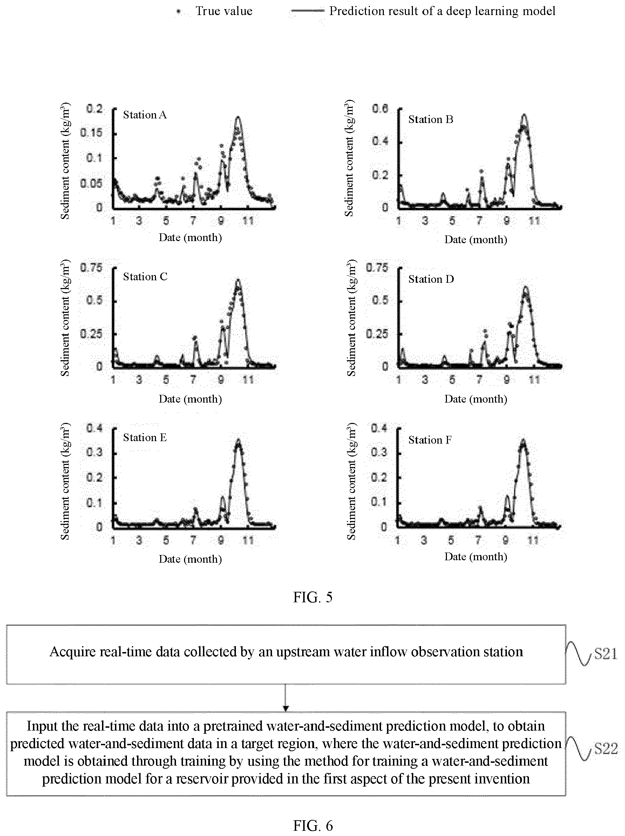

FIG. 4 shows comparison results of a water level, a flow rate, and a true value obtained through prediction by using a water-and-sediment prediction model. FIG. 5 shows comparison results of sediment content and a true value obtained through prediction by using a water-and-sediment prediction model. As can be seen from FIG. 4 and FIG. 5, differences between flow rate, water level, and sediment content predicted by the water-and-sediment prediction model obtained through training in the foregoing embodiments and actual values are relatively small. Therefore, the flow rate, water level, and sediment content can be accurately predicted by using the water-and-sediment prediction model obtained through training in the foregoing embodiments.

In addition, in the embodiments of the present invention, the time consumption of using the water-and-sediment prediction model obtained through training in the foregoing embodiments to predict the water-and-sediment data of the stations is further compared with the time consumption of using a conventional mathematical model to predict the water-and-sediment data of the stations. Comparison results are shown in Table 2 below:

Table 2

| Time consumption of a conventional mathematical model (Unit: second) | Time consumption of a water-and-sediment prediction model (Unit: second) | Acceleration multiplying factor (multiple) of the water-and-sediment prediction model compared with the conventional mathematical model |
|---|---|---|
| 7200 | 350 | 19.6 |

As can be seen from Table 2 above, the flow rate, water level, and sediment content can be rapidly predicted by using the water-and-sediment prediction model obtained through training using the method provided in the foregoing embodiments.

An embodiment of the present invention provides a method for predicting water-and-sediment in a reservoir is provided. As shown in FIG. 6, the method includes the following steps.

Step S21: Acquire real-time data collected by an upstream water inflow observation station. For the detailed content of the real-time data, reference may be made to the description of the water inflow data in the foregoing embodiments. Details are not described again herein.

Step S22: Input the real-time data into a pretrained water-and-sediment prediction model, to obtain predicted water-and-sediment data in a target region. For the training process of the water-and-sediment prediction model, reference may be made to the description in the foregoing embodiments. Details are not described again herein.

For the method for predicting water-and-sediment in a reservoir provided in the embodiments of the present invention, after real-time data collected by an upstream water inflow observation station is acquired, the real-time data is inputted into a pretrained water-and-sediment prediction model, to obtain predicted water-and-sediment data in a target region, where the water-and-sediment prediction model is obtained through training by using the method for training a water-and-sediment prediction model for a reservoir provided in the foregoing embodiments of the present invention. During the training of a water-and-sediment prediction model, inbound water flow data is first inputted into a preestablished mathematical model, to obtain water-and-sediment data of a target region, and then the inbound water flow data and the water-and-sediment data of the target region are used as training data to train an initial neural network model, to obtain a water-and-sediment prediction model of the target region. The mathematical model is established according to historical actually-measured data collected by an upstream water inflow observation station and a downstream observation station. The mathematical model is based on strict physical law. Water-and-sediment data of any region can be obtained through simulation by using the mathematical model. In this way, the water-and-sediment prediction model obtained through training by using the inbound water flow data and the water-and-sediment data that is obtained by using the mathematical model as training data, thereby achieving independence from the actual measurement of on-way stations in a reservoir region. Further, because a neural network model has a robust fitting expression ability for a change process of nonlinear, multi-component data, and an output result can be rapidly and appropriately given after training with training data. A water-and-sediment prediction model is obtained through training by using the method for training a water-and-sediment prediction model for a reservoir provided in the embodiments, so that water-and-sediment data of any target region can be predicted rapidly and in time, to provide important reference for the real-time and fine regulation of a reservoir. Therefore, through the method for predicting water-and-sediment in a reservoir provided in the embodiments of the present invention, water-and-sediment data of any target region can be predicted rapidly and in time.

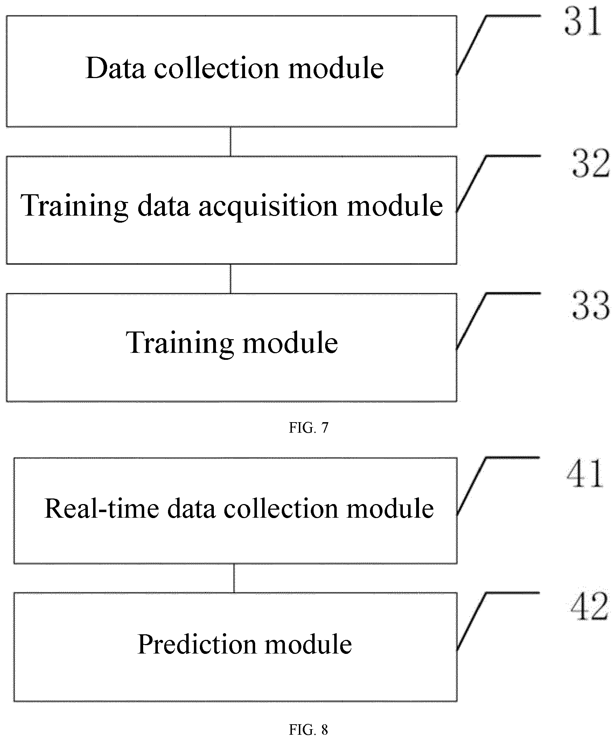

An embodiment of the present invention provides an apparatus for training a water-and-sediment prediction model for a reservoir is provided. As shown in FIG. 7, the apparatus includes a data acquisition module 31, a training data acquisition module 32, and a training module 33.

The data acquisition module 31 is configured to acquire inbound water flow data. For the detailed content, reference may be made to the description of S11 in the foregoing embodiments. Details are not described again herein.

The training data acquisition module 32 is configured to input the inbound water flow data into a preestablished mathematical model, to obtain water-and-sediment data of a target region, where the mathematical model is established by using historical actually-measured data, the historical actually-measured data includes water inflow data and on-way water-and-sediment data, the water inflow data is acquired by an upstream water inflow observation station, and the on-way water-and-sediment data is acquired by a downstream observation station. For the detailed content, reference may be made to the description of S12 in the foregoing embodiments. Details are not described again herein.

The training module 33 is configured to: use the inbound water flow data and the water-and-sediment data of the target region as training data, and train an initial neural network model with the training data, to obtain a water-and-sediment prediction model of the target region. For the detailed content, reference may be made to the description of S13 in the foregoing embodiments. Details are not described again herein.

An embodiment of the present invention provides an apparatus for predicting water-and-sediment in a reservoir is provided. As shown in FIG. 8, the apparatus includes a real-time data collection module 41 and a prediction module 42.

The real-time data collection module 41 is configured to acquire real-time data collected by an upstream water inflow observation station. For the detailed content, reference may be made to the description of S21 in the foregoing embodiments. Details are not described again herein.

The prediction module 42 is configured to input the real-time data into a pretrained water-and-sediment prediction model, to obtain predicted water-and-sediment data in a target region. For the detailed content, reference may be made to the description of S22 in the foregoing embodiments. Details are not described again herein.

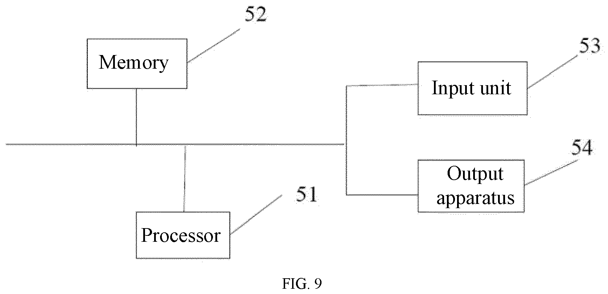

Embodiments of the present invention provide a computer device. As shown in FIG. 9, the computer device mainly includes one or more processors 51 and a memory 52. In FIG. 9, for example, one processor 51 is used.

The computer device may further include an input apparatus 53 and an output apparatus 54.

The processor 51, the memory 52, the input apparatus 53, and the output apparatus 54 may be connected by a bus or in another manner. In FIG. 9, for example, a bus connection is used.

The processor 51 may be a central processing unit (CPU). The processor 51 may be another general-purpose processor, digital signal processor (DSP), application-specific integrated circuit (ASIC), field-programmable gate array (FPGA) or another programmable logic device, discrete gate or transistor logic device, a discrete hardware component, among other chips, or a combination of the foregoing various types of chips. The general-purpose processor may be a microprocessor or the processor may be any conventional processor or the like. The memory 52 may include a program storage area and a data storage area. The program storage area may store an operating system and an application required for at least one function. The data storage area may store data and the like created according to the use of the apparatus for training a water-and-sediment prediction model for a reservoir or the apparatus for predicting water-and-sediment in a reservoir. Moreover, the storage 52 may include a high-speed random access memory (RAM), and may further include a non-transitory storage, for example, at least one magnetic disk storage device, flash storage device, or other non-transitory solid state storage device. In some embodiments, the memory 52 optionally includes memories disposed remotely with respect to the processor 51. These remote memories may be connected to the apparatus for training a water-and-sediment prediction model for a reservoir or the apparatus for predicting water-and-sediment in a reservoir by a network. The input apparatus 53 may receive a computing request (or other digital or character information) entered by a user, and generate a key signal input related to the apparatus for training a water-and-sediment prediction model for a reservoir or the apparatus for predicting water-and-sediment in a reservoir. The output apparatus 54 may include a display device such as a display screen configured to output a computing result.

Embodiments of the present invention provide a computer-readable store medium. The computer-readable storage medium stores computer instructions. the computer storage medium stores a computer-executable instruction, The computer-executable instructions may perform the method for training a water-and-sediment prediction model for a reservoir or the method for predicting water-and-sediment in a reservoir of any of the method embodiments described above. The storage medium may be a magnetic disk, an optical disc, a read-only memory (ROM), a RAM, a flash memory, a hard disk drive (HDD) or a solid-state drive (SSD) or the like. The storage medium may include a combination of the memories of the foregoing types.

Obviously, the foregoing embodiments are merely examples for clear description, rather than a limitation to implementations. For a person of ordinary skill in the art, other changes or variations in different forms may also be made based on the foregoing description. All implementations cannot and do not need to be exhaustively listed herein. Obvious changes or variations that are derived there from and that are within the scope of the claims still fall within the protection scope of the invention of the present invention.

## Claims

1. A method for training a water-and-sediment prediction model for a reservoir, comprising:

   acquiring inbound water flow data;
   **characterized by** further comprising:

   inputting the inbound water flow data into a preestablished mathematical model, to obtain water-and-sediment data of a target region, wherein the mathematical model is established by using historical actually-measured data, the historical actually-measured data comprises water inflow data and on-way water-and-sediment data, the water inflow data is acquired by an upstream water inflow observation station, the on-way water-and-sediment data is acquired by a downstream observation station, and no observation station is arranged within the target region; and
   using the inbound water flow data and the water-and-sediment data of the target region as training data, and training an initial neural network model with the training data, to obtain a water-and-sediment prediction model of the target region,
   wherein the mathematical model comprises a hydrodynamic model, the water-and-sediment data comprises a cross-sectional water level and a cross-sectional flow rate of the target region, and
   the hydrodynamic model is:

$$\frac{\partial Q}{\partial x} + B_T \frac{\partial Z}{\partial t} = q$$

$$\frac{\partial Q}{\partial t} + \frac{\partial}{\partial x}\left(\alpha \frac{Q^2}{A}\right) + gA \frac{\partial Z}{\partial x} + g \frac{|Q|Q}{c^2 AR} = 0,$$

   wherein x represents a longitudinal coordinate of the target region in a riverway, t represents a time interval between two adjacent times of detection, Q represents the cross-sectional flow rate of the target region, Z

represents the cross-sectional water level of the target region, $B_T$ represents an equivalent river width of the target region, $q$ represents a side inflow rate of a unit river length, $\alpha$ represents a hydrodynamic correction coefficient, $A$ represents a cross-sectional area of the target region, $g$ represents gravitational acceleration, $C$ represents the Chézy coefficient, and $R$ represents a hydraulic radius of the target region;

the mathematical model further comprises a suspended load sediment value model, the water-and-sediment data further comprises cross-sectional sediment content of different particle size groups of sediment within the target region,

the suspended load sediment value model comprises:

a transport control equation of suspended load: $\dfrac{\partial QS_k}{\partial x} + \dfrac{\partial AS_k}{\partial t} + \alpha_k \omega_k B_T (S_k - S_{*k}) = 0$ ,

an equation of riverbed scouring-and-deposition deformation caused by the suspended load:

$$\rho' \frac{\partial A_s}{\partial t} = \alpha_k \omega_k B_T (S_k - S_{*k})$$ ,

wherein $Q$ represents the cross-sectional flow rate of the target region, $S_k$ represents cross-sectional sediment content of a $k^{th}$ particle size group of sediment within the target region, x represents the longitudinal coordinate of the target region in the riverway, $A$ represents the cross-sectional area of the target region, As represents a scouring and deposition area of the target region, $S_{*k}$ represents cross-sectional sediment carrying capacity of the $k^{th}$ particle size group of sediment within the target region, $W_k$ and $\alpha_k$ respectively represent settling velocity and a saturation-recovering coefficient of the $k^{th}$ particle size group of sediment, $\rho'$ represents dry bulk density of the sediment, and $B_T$ represents the equivalent river width of the target region;

or,

the mathematical model further comprises a bed load sediment value model, and the water-and-sediment data further comprises a sediment transport rate of the target region:

the bed load sediment value model comprises:

a transport control equation of bed load: $G_b = G_b (U, Z, d, \cdots)$
an equation of riverbed scouring-and-deposition deformation caused by the bed load:

$$\frac{\partial (G_b)}{\partial x} + \frac{\partial (\rho' A_b)}{\partial t} = 0$$ ,

wherein $G_b$ represents a sediment transport rate of the bed load, $U$ represents cross-sectional average flow velocity within the target region, $Z$ represents the cross-sectional water level of the target region, $d$ represents a particle size of the sediment, $x$ represents the longitudinal coordinate of the target region in the riverway, $t$ represents the time interval between two adjacent times of detection, $\rho'$ represents the dry bulk density of the sediment, and $A_b$ represents the scouring and deposition area of the target region.

2. The method for training a water-and-sediment prediction model for a reservoir according to claim 1, **characterized in that** the step of acquiring inbound water flow data comprises:

acquiring sampled water inflow data collected by the upstream water inflow observation station within a reference period, wherein the reference period comprises a wet year, a normal year, and a dry year; and
scaling the sampled water inflow data, to obtain the inbound water flow data.

3. The method for training a water-and-sediment prediction model for a reservoir according to claim 1, **characterized in that**

the initial neural network model comprises an input layer and an output layer;
dimension of the input layer is determined according to a quantity of the upstream water inflow observation stations; and
dimension of the output layer is determined according to a quantity of the target regions.

4.  A method for predicting water-and-sediment in a reservoir, **characterized by** comprising:

    acquiring real-time data collected by an upstream water inflow observation station; and
    inputting the real-time data into a pretrained water-and-sediment prediction model, to obtain predicted water-and-sediment data in a target region, wherein the water-and-sediment prediction model is obtained through training by using the method for training a water-and-sediment prediction model for a reservoir according to any one of claims 1 to 3, and no observation station is arranged within the target region.

5.  An apparatus for training a water-and-sediment prediction model for a reservoir, comprising:

    a data acquisition module, configured to acquire inbound water flow data;
    **characterized by**
    a training data acquisition module, configured to input the inbound water flow data into a preestablished mathematical model, to obtain water-and-sediment data of a target region, wherein the mathematical model is established by using historical actually-measured data, the historical actually-measured data comprises water inflow data and on-way water-and-sediment data, the water inflow data is acquired by an upstream water inflow observation station, the on-way water-and-sediment data is acquired by a downstream observation station, and no observation station is arranged within the target region; and
    a training module, configured to: use the inbound water flow data and the water-and-sediment data of the target region as training data, and train an initial neural network model with the training data, to obtain a water-and-sediment prediction model of the target region,
    wherein the mathematical model comprises a hydrodynamic model, the water-and-sediment data comprises a cross-sectional water level and a cross-sectional flow rate of the target region, and
    the hydrodynamic model is:

$$\frac{\partial Q}{\partial x} + B_T \frac{\partial Z}{\partial t} = q$$

$$\frac{\partial Q}{\partial t} + \frac{\partial}{\partial x}(\alpha \frac{Q^2}{A}) + gA\frac{\partial Z}{\partial x} + g\frac{|Q|Q}{c^2 AR} = 0 ,$$

    wherein x represents a longitudinal coordinate of the target region in a riverway, $t$ represents a time interval between two adjacent times of detection, $Q$ represents the cross-sectional flow rate of the target region, $Z$ represents the cross-sectional water level of the target region, $B_T$ represents an equivalent river width of the target region, $q$ represents a side inflow rate of a unit river length, $\alpha$ represents a hydrodynamic correction coefficient, $A$ represents a cross-sectional area of the target region, $g$ represents gravitational acceleration, $C$ represents the Chézy coefficient, and $R$ represents a hydraulic radius of the target region;
    the mathematical model further comprises a suspended load sediment value model, the water-and-sediment data further comprises cross-sectional sediment content of different particle size groups of sediment within the target region,
    the suspended load sediment value model comprises:

$$\frac{\partial QS_k}{\partial x} + \frac{\partial AS_k}{\partial t} + \alpha_k \omega_k B_T (S_k - S_{*k}) = 0 ,$$

$$\rho' \frac{\partial A_s}{\partial t} = \alpha_k \omega_k B_T (S_k - S_{*k})$$

    a transport control equation of suspended load:
    an equation of riverbed scouring-and-deposition deformation caused by the suspended load:

    wherein $Q$ represents the cross-sectional flow rate of the target region, $S_k$ represents cross-sectional sediment content of a $k^{th}$ particle size group of sediment within the target region, $x$ represents the longitudinal coordinate of the target region in the riverway, $A$ represents the cross-sectional area of the target region, As represents a scouring and deposition area of the target region, $S_{*k}$ represents cross-sectional sediment carrying capacity of the $k^{th}$ particle size group of sediment within the target region, $W_k$ and $\alpha_k$ respectively represent settling velocity and a saturation-recovering coefficient of the $k^{th}$ particle size group of sediment,

$\rho'$ represents dry bulk density of the sediment, and $B_T$ represents the equivalent river width of the target region;

or,

the mathematical model further comprises a bed load sediment value model, and the water-and-sediment data further comprises a sediment transport rate of the target region:

the bed load sediment value model comprises:

a transport control equation of bed load: $G_b = G_b (U, Z, d, \cdots)$,

an equation of riverbed scouring-and-deposition deformation caused by the bed load:

$$\frac{\partial(G_b)}{\partial x} + \frac{\partial(\rho' A_b)}{\partial t} = 0 \quad ,$$

wherein $G_b$ represents a sediment transport rate of the bed load, $U$ represents cross-sectional average flow velocity within the target region, $Z$ represents the cross-sectional water level of the target region, $d$ represents a particle size of the sediment, $x$ represents the longitudinal coordinate of the target region in the riverway, $t$ represents the time interval between two adjacent times of detection, $\rho'$ represents the dry bulk density of the sediment, and $A_b$ represents the scouring and deposition area of the target region.

6. A computer-readable storage medium, with computer instructions stored therein, **characterized in that** the computer instructions are used for causing a computer to perform the method for training a water-and-sediment prediction model for a reservoir according to any one of claims 1 to 3, or, to perform the method for predicting water-and-sediment in a reservoir according to claim 4.

**Patentansprüche**

1. Verfahren zum Trainieren eines Wasser- und Sedimentvorhersagemodells für ein Reservoir, umfassend:

Erfassen von eingehenden Wasserflussdaten;
**dadurch gekennzeichnet, dass** es ferner Folgendes umfasst:

Eingeben der eingehenden Wasserflussdaten in ein zuvor erstelltes mathematisches Modell, um Wasser- und Sedimentdaten eines Zielgebiets zu erhalten, wobei das mathematische Modell unter Verwendung historischer, tatsächlich gemessener Daten erstellt wird, die historischen, tatsächlich gemessenen Daten Wasserzuflussdaten und Durchfluss-Wasser- und Sedimentdaten umfassen, die Wasserzuflussdaten von einer stromaufwärts gelegenen Wasserzufluss-Beobachtungsstation erfasst werden, die Durchfluss-Wasser- und Sedimentdaten von einer stromabwärts gelegenen Beobachtungsstation erfasst werden, und keine Beobachtungsstation innerhalb des Zielgebiets angeordnet ist; und
Verwenden der eingehenden Wasserflussdaten und der Wasser- und Sedimentdaten des Zielgebiets als Trainingsdaten und Trainieren eines anfänglichen neuronalen Netzwerkmodells mit den Trainingsdaten, um ein Wasser- und Sedimentvorhersagemodell des Zielgebiets zu erhalten,
wobei das mathematische Modell ein hydrodynamisches Modell umfasst, die Wasser- und Sedimentdaten einen Querschnittswasserstand und eine Querschnittsdurchflussrate des Zielgebiets umfassen, und das hydrodynamische Modell

$$\frac{\partial Q}{\partial x} + B_T \frac{\partial Z}{\partial t} = q$$

$$\frac{\partial Q}{\partial t} + \frac{\partial}{\partial x}\left(\alpha \frac{Q^2}{A}\right) + gA \frac{\partial Z}{\partial x} + g \frac{|Q|Q}{c^2 AR} = 0$$

ist,
wobei x eine Längskoordinate des Zielgebiets darstellt, $t$ **ein** Zeitintervall zwischen zwei aufeinanderfolgenden Erfassungszeitpunkten darstellt, $Q$ die Querschnittsdurchflussrate des Zielgebiets darstellt, $Z$ den Querschnittswasserstand des Zielgebiets darstellt, $B_T$ eine äquivalente Flussbreite des Zielgebiets darstellt, $q$ eine seitliche Zuflussrate einer Flusslängeneinheit darstellt, $\alpha$ einen hydrodynamischen Korrekturkoeffizienten darstellt, $A$ eine Querschnittsfläche des Zielgebiets darstellt, $g$ die Gravitationsbeschleunigung darstellt, $C$ den Chézy-Koeffizienten darstellt und $R$ einen hydraulischen Radius des Zielgebiets darstellt;
das mathematische Modell ferner ein Schwebstoffsedimentwertmodell umfasst, wobei die Wasser- und Sedimentdaten ferner den Querschnittssedimentgehalt verschiedener Partikelgrößengruppen des Sediments innerhalb des Zielgebiets umfassen,
das Schwebstoffsedimentwertmodell Folgendes umfasst:

eine Transportkontrollgleichung der Schwebstoffe: $\dfrac{\partial QS_k}{\partial x} + \dfrac{\partial AS_k}{\partial t} + \alpha_k \omega_k B_T (S_k - S_{*k}) = 0$ ,

eine Gleichung für die durch die Schwebstoffe verursachte Deformation des Flussbettes durch Aus-

$$\rho' \frac{\partial A_s}{\partial t} = \alpha_k \omega_k B_T (S_k - S_{*k})$$

höhlung und Ablagerung: ,
wobei $Q$ die Querschnittsdurchflussrate des Zielgebiets darstellt, $S_k$ den Querschnittssedimentgehalt einer k-ten Partikelgrößengruppe von Sediment innerhalb des Zielgebiets darstellt, $x$ die Längskoordinate des Zielgebiets im Wasserweg darstellt, $A$ den Querschnittsbereich des Zielgebiets darstellt, $As$ einen Aushöhlungs- und Ablagerungsbereich des Zielgebiets darstellt, $S_{*k}$ die Querschnitts-Sedimenttragfähigkeit der k-ten Partikelgrößengruppe von Sediment innerhalb des Zielgebiets darstellt, $W_k$ und $\alpha_k$ die Absetzgeschwindigkeit bzw. den Sättigungswiederherstellungskoeffizienten der k-ten Partikelgrößengruppe von Sediment darstellen, $p'$ die Trockenrohdichte des Sediments darstellt und $B_T$ die äquivalente Flussbreite des Zielgebiets darstellt;
oder
das mathematische Modell ferner ein Geschiebesedimentwertmodell umfasst und die Wasser- und Sedimentdaten ferner eine Sedimenttransportrate des Zielgebiets umfassen:
das Geschiebesedimentwertmodell Folgendes umfasst:

eine Transportkontrollgleichung des Geschiebes: $G_b = G_b (U, Z, d, \cdots)$
eine Gleichung für die durch das Geschiebe verursachte Deformation des Flussbettes durch Aushöhlung und Ablagerung:

$$\frac{\partial (G_b)}{\partial x} + \frac{\partial (\rho' A_b)}{\partial t} = 0$$

wobei $G_b$ eine Sedimenttransportrate des Geschiebes darstellt, $U$ die durchschnittliche Querschnittsfließgeschwindigkeit innerhalb des Zielgebiets darstellt, $Z$ den Querschnittswasserstand des Zielgebiets darstellt, $d$ eine Partikelgröße des Sediments darstellt, x die Längskoordinate des Zielgebiets im Wasserweg darstellt, $t$ das Zeitintervall zwischen zwei aufeinanderfolgenden Erfassungszeitpunkten darstellt, $p'$ die Trockenrohdichte des Sediments darstellt und $A_b$ den Aushöhlungs- und Ablagerungsbereich des Zielgebiets darstellt.

2. Verfahren zum Trainieren eines Wasser- und Sedimentvorhersagemodells für ein Reservoir nach Anspruch 1, **dadurch gekennzeichnet, dass** der Schritt des Erfassens von eingehenden Wasserflussdaten Folgendes umfasst:

Erfassen von abgetasteten Wasserzuflussdaten, die von der stromaufwärts gelegenen Wasserzufluss-Beobachtungsstation innerhalb eines Referenzzeitraums gesammelt werden, wobei der Referenzzeitraum ein nasses Jahr, ein normales Jahr und ein trockenes Jahr umfasst; und
Skalieren der abgetasteten Wasserzuflussdaten, um die eingehenden Wasserflussdaten zu erhalten.

3. Verfahren zum Trainieren eines Wasser- und Sedimentvorhersagemodells für ein Reservoir nach Anspruch 1, **dadurch gekennzeichnet, dass**

das anfängliche neuronale Netzwerkmodell eine Eingabeschicht und eine Ausgabeschicht umfasst;
die Größe der Eingabeschicht entsprechend einer Menge der stromaufwärts gelegenen Wasserzufluss-Beobachtungsstationen bestimmt wird; und

die Größe der Ausgabeschicht entsprechend einer Menge der Zielgebiete bestimmt wird.

4. Verfahren zur Vorhersage von Wasser und Sediment in einem Reservoir, **dadurch gekennzeichnet, dass** es Folgendes umfasst:

Erfassen von Echtzeitdaten, die von einer stromaufwärts gelegenen Wasserzufluss-Beobachtungsstation gesammelt werden; und

Eingeben der Echtzeitdaten in ein vortrainiertes Wasser-und-Sedimentvorhersagemodell, um vorhergesagte Wasser- und Sedimentdaten in einem Zielgebiet zu erhalten, wobei das Wasser- und Sedimentvorhersagemodell durch Training unter Verwendung des Verfahrens zum Trainieren eines Wasser- und Sedimentvorhersagemodells für ein Reservoir nach einem der Ansprüche 1 bis 3 erhalten wird und keine Beobachtungsstation innerhalb des Zielgebiets angeordnet ist.

5. Vorrichtung zum Trainieren eines Wasser- und Sedimentvorhersagemodells für ein Reservoir, umfassend:

ein Datenerfassungsmodul, das konfiguriert ist, um eingehende Wasserflussdaten zu erfassen; **gekennzeichnet durch** ein Trainingsdatenerfassungsmodul, das konfiguriert ist, um die eingehenden Wasserflussdaten in ein zuvor erstelltes mathematisches Modell einzugeben, um Wasser- und Sedimentdaten eines Zielgebiets zu erhalten, wobei das mathematische Modell unter Verwendung historischer, tatsächlich gemessener Daten erstellt wird, die historischen, tatsächlich gemessenen Daten Wasserzuflussdaten und Durchfluss-Wasser- und Sedimentdaten umfassen, die Wasserzuflussdaten von einer stromaufwärts gelegenen Wasserzufluss-Beobachtungsstation erfasst werden, die Durchfluss-Wasser- und Sedimentdaten von einer stromabwärts gelegenen Beobachtungsstation erfasst werden und keine Beobachtungsstation innerhalb des Zielgebiets angeordnet ist; und

ein Trainingsmodul, das konfiguriert ist zum: Verwenden der eingehenden Wasserflussdaten und der Wasser- und Sedimentdaten des Zielgebiets als Trainingsdaten und Trainieren eines anfänglichen neuronalen Netzwerkmodells mit den Trainingsdaten, um ein Wasser- und Sedimentvorhersagemodell des Zielgebiets zu erhalten,

wobei das mathematische Modell ein hydrodynamisches Modell umfasst, die Wasser- und Sedimentdaten einen Querschnittswasserstand und eine Querschnittsdurchflussrate des Zielgebiets umfassen, und

das hydrodynamische Modell

$$\frac{\partial Q}{\partial x} + B_T \frac{\partial Z}{\partial t} = q$$

$$\frac{\partial Q}{\partial t} + \frac{\partial}{\partial x}\left(\alpha \frac{Q^2}{A}\right) + gA\frac{\partial Z}{\partial x} + g\frac{|Q|Q}{c^2 AR} = 0$$

ist,

wobei $x$ eine Längskoordinate des Zielgebiets darstellt, $t$ ein Zeitintervall zwischen zwei aufeinanderfolgenden Erfassungszeitpunkten darstellt, $Q$ die Querschnittsdurchflussrate des Zielgebiets darstellt, $Z$ den Querschnittswasserstand des Zielgebiets darstellt, $B_T$ eine äquivalente Flussbreite des Zielgebiets darstellt, $q$ eine seitliche Zuflussrate einer Flusslängeneinheit darstellt, $\alpha$ einen hydrodynamischen Korrekturkoeffizienten darstellt, $A$ einen Querschnittsbereich des Zielgebiets darstellt, $g$ die Gravitationsbeschleunigung darstellt, $C$ den Chézy-Koeffizienten darstellt und $R$ einen hydraulischen Radius des Zielgebiets darstellt;

das mathematische Modell ferner ein Schwebestoffsedimentwertmodell umfasst, die Wasser- und Sedimentdaten ferner den Querschnittssedimentgehalt von verschiedenen Partikelgrößengruppen von Sediment innerhalb des Zielgebiets umfassen,

das Schwebstoffsedimentwertmodell Folgendes umfasst:

$$\frac{\partial QS_k}{\partial x} + \frac{\partial AS_k}{\partial t} + \alpha_k \omega_k B_T (S_k - S_{*k}) = 0$$

eine Transportkontrollgleichung der Schwebstoffe: $\rho' \frac{\partial A_s}{\partial t} = \alpha_k \omega_k B_T (S_k - S_{*k})$ ,

eine Gleichung für die durch die Schwebstoffe verursachte Deformation des Flussbettes durch Aushöhlung und Ablagerung:

wobei $Q$ die Querschnittsdurchflussrate des Zielgebiets darstellt, $Sk$ den Querschnittssedimentgehalt einer k-ten Partikelgrößengruppe von Sediment innerhalb des Zielgebiets darstellt, x die Längskoordinate des Zielgebiets im Wasserweg darstellt, $A$ den Querschnittsbereich des Zielgebiets darstellt, As einen Aushöhlungs- und Ablagerungsbereich des Zielgebiets darstellt, $S_{+k}$ die Querschnitts-Sedimenttragfähigkeit der k-ten Partikelgrößengruppe von Sediment innerhalb des Zielgebiets darstellt, $W_k$ und $a_k$ die Absetzgeschwindigkeit bzw. einen Sättigungswiederherstellungskoeffizienten der k-ten Partikelgrößengruppe von Sediment darstellen, $p'$ die Trockenrohdichte des Sediments darstellt und $B_T$ die äquivalente Flussbreite des Zielgebiets darstellt;
oder

das mathematische Modell ferner ein Geschiebesedimentwertmodell umfasst und die Wasser- und Sedimentdaten ferner eine Sedimenttransportrate des Zielgebiets umfassen:
das Geschiebesedimentwertmodell Folgendes umfasst:

eine Transportkontrollgleichung des Geschiebes: $G_b = G_b (U,Z,d,\cdots)$,
eine Gleichung für die durch das Geschiebe verursachte Deformation des Flussbettes durch Aushöhlung und Ablagerung:

$$\frac{\partial(G_b)}{\partial x} + \frac{\partial(\rho^{'} A_b)}{\partial t} = 0 \quad,$$

wobei $G_b$ eine Sedimenttransportrate des Geschiebes darstellt, $U$ die durchschnittliche Querschnittsfließgeschwindigkeit innerhalb des Zielgebiets darstellt, $Z$ den Querschnittswasserstand des Zielgebiets darstellt, $d$ eine Partikelgröße des Sediments darstellt, x die Längskoordinate des Zielgebiets im Wasserweg darstellt, $t$ das Zeitintervall zwischen zwei aufeinanderfolgenden Erfassungszeitpunkten darstellt, $p'$ die Trockenrohdichte des Sediments darstellt und $A_b$ den Aushöhlungs- und Ablagerungsbereich des Zielgebiets darstellt.

6. Computerlesbares Speichermedium mit darin gespeicherten Computerbefehlen, **dadurch gekennzeichnet, dass** die Computerbefehle dazu verwendet werden, einen Computer zu veranlassen, das Verfahren zum Trainieren eines Wasser- und Sedimentvorhersagemodells für ein Reservoir nach einem der Ansprüche 1 bis 3 oder das Verfahren zur Vorhersage von Wasser und Sediment in einem Reservoir nach Anspruch 4 durchzuführen.

**Revendications**

1. Procédé pour l'apprentissage d'un modèle de prédiction d'eau et de sédiment pour un réservoir, comprenant :

l'acquisition de données d'écoulement d'eau entrant ;
**caractérisé en ce qu'**il comprend en outre :

l'entrée des données d'écoulement d'eau entrant dans un modèle mathématique préétabli, pour obtenir des données d'eau et de sédiment d'une région cible, dans lequel le modèle mathématique est établi en utilisant des données historiques réellement mesurées, les données historiques réellement mesurées comprennent des données d'écoulement d'entrée d'eau et des données d'eau et de sédiment en route, les données d'écoulement d'entrée d'eau sont acquises par une station d'observation d'écoulement d'entrée d'eau en amont, les données d'eau et de sédiment en route sont acquises par une station d'observation en aval, et aucune station d'observation n'est agencée à l'intérieur de la région cible ; et
l'utilisation des données d'écoulement d'eau entrant et des données d'eau et de sédiment de la région cible en tant que données d'apprentissage, et l'apprentissage d'un modèle de réseau neuronal initial avec les données d'apprentissage, pour obtenir un modèle de prédiction d'eau et de sédiment de la région cible, dans lequel le modèle mathématique comprend un modèle hydrodynamique, les données d'eau et de sédiment comprennent un niveau d'eau en section transversale et un débit d'écoulement en section transversale de la région cible, et
le modèle hydrodynamique est :

$$\frac{\partial Q}{\partial x} + B_T \frac{\partial Z}{\partial t} = q$$

$$\frac{\partial Q}{\partial t} + \frac{\partial}{\partial x}(\alpha \frac{Q^2}{A}) + gA\frac{\partial Z}{\partial x} + g\frac{|Q|Q}{c^2 AR} = 0 \quad ,$$

dans laquelle $x$ représente une coordonnée longitudinale de la région cible dans un cours de rivière, $t$ représente un intervalle de temps entre deux temps adjacents de détection, $Q$ représente le débit d'écoulement en section transversale de la région cible, $Z$ représente le niveau d'eau en section transversale de la région cible, $B_T$ représente une largeur de rivière équivalente de la région cible, $q$ représente un débit d'écoulement d'entrée latéral d'une longueur de rivière unitaire, $\alpha$ représente un coefficient de correction hydrodynamique, $A$ représente une superficie de section transversale de la région cible, $g$ représente une accélération gravitationnelle, $C$ représente le coefficient de Chézy, et $R$ représente un rayon hydraulique de la région cible ;

le modèle mathématique comprend en outre un modèle de valeur de sédiment de charge en suspension, les données d'eau et de sédiment comprennent en outre une teneur en sédiment en section transversale de différents groupes de tailles de particules de sédiment à l'intérieur de la région cible,

le modèle de valeur de sédiment de charge en suspension comprend :

une équation de contrôle de transport de charge en suspension :

$$\frac{\partial QS_k}{\partial x} + \frac{\partial AS_k}{\partial t} + \alpha_k \omega_k B_T (S_k - S_{*k}) = 0 \quad ,$$

une équation de déformation d'affouillement et de dépôt de lit de rivière causée par la charge en suspension,

$$\rho' \frac{\partial A_s}{\partial t} = \alpha_k \omega_k B_T (S_k - S_{*k}) \quad ,$$

dans laquelle $Q$ représente le débit d'écoulement en section transversale de la région cible, $S_k$ représente une teneur en sédiment en section transversale d'un k[ième] groupe de tailles de particules de sédiment à l'intérieur de la région cible, $x$ représente la coordonnée longitudinale de la région cible dans le cours de rivière, $A$ représente la superficie de section transversale de la région cible, $As$ représente une superficie d'affouillement et de dépôt de la région cible, $S_{+k}$ représente une capacité de support de sédiment en section transversale du k[ième] groupe de tailles de particules de sédiment à l'intérieur de la région cible, $W_k$ et $\alpha_k$ représentent respectivement une vitesse de sédimentation et un coefficient de récupération de saturation du k[ième] groupe de tailles de particules de sédiment, $\rho'$ représente une masse volumique apparente à sec du sédiment, et $B_T$ représente la largeur de rivière équivalente de la région cible ;

ou,

le modèle mathématique comprend en outre un modèle de valeur de sédiment de charge de lit, et les données d'eau et de sédiment comprennent en outre un débit de transport de sédiment de la région cible ;

le modèle de valeur de sédiment de charge de lit comprend :

une équation de contrôle de transport de charge de lit : $G_b = G_b (U,Z,d,\cdots)$,

une équation de déformation d'affouillement et de dépôt de lit de rivière causée par la charge de lit :

$$\frac{\partial(G_b)}{\partial x} + \frac{\partial(\rho' A_b)}{\partial t} = 0 \quad ,$$

dans laquelle $G_b$ représente un débit de transport de sédiment de la charge de lit, $U$ représente une vitesse d'écoulement moyenne en section transversale à l'intérieur de la région cible, $Z$ représente le niveau d'eau en section transversale de la région cible, $d$ représente une taille de particules du sédiment, $x$ représente la coordonnée longitudinale de la région cible dans le cours de rivière, $t$ représente l'intervalle de temps entre deux temps adjacents de détection, $\rho'$ représente la masse volumique apparente à sec du sédiment, et $A_b$ représente la superficie d'affouillement et de dépôt de la région cible.

2. Procédé pour l'apprentissage d'un modèle de prédiction d'eau et de sédiment pour un réservoir selon la revendication 1, **caractérisé en ce que** l'étape de l'acquisition de données d'écoulement d'eau entrant comprend :

l'acquisition de données d'écoulement d'entrée d'eau échantillonnées collectées par la station d'observation d'écoulement d'entrée d'eau en amont au sein d'une période de référence, dans lequel la période de référence comprend une année pluvieuse, une année normale, et une année sèche ; et
la mise à échelle des données d'écoulement d'entrée d'eau échantillonnées, pour obtenir les données d'écoulement d'eau entrant.

3. Procédé pour l'apprentissage d'un modèle de prédiction d'eau et de sédiment pour un réservoir selon la revendication 1, **caractérisé en ce que**

le modèle de réseau neuronal initial comprend une couche d'entrée et une couche de sortie ;
une dimension de la couche d'entrée est déterminée selon une quantité des stations d'observation d'écoulement d'entrée d'eau en amont ; et
une dimension de la couche de sortie est déterminée selon une quantité des régions cibles.

4. Procédé pour prédire l'eau et le sédiment dans un réservoir, **caractérisé en ce qu'**il comprend :

l'acquisition de données en temps réel collectées par une station d'observation d'écoulement d'entrée d'eau en amont ; et
l'entrée des données en temps réel dans un modèle de prédiction d'eau et de sédiment ayant fait l'objet d'un préapprentissage, pour obtenir des données d'eau et de sédiment prédites dans une région cible, dans lequel le modèle de prédiction d'eau et de sédiment est obtenu par l'intermédiaire d'apprentissage en utilisant le procédé pour l'apprentissage d'un modèle de prédiction d'eau et de sédiment pour un réservoir selon l'une quelconque des revendications 1 à 3, et aucune station d'observation n'est agencée à l'intérieur de la région cible.

5. Appareil pour l'apprentissage d'un modèle de prédiction d'eau et de sédiment pour un réservoir, comprenant

un module d'acquisition de données, configuré pour acquérir des données d'écoulement d'eau entrant ;
**caractérisé par**
un module d'acquisition de données d'apprentissage, configuré pour entrer les données d'écoulement d'eau entrant dans un modèle mathématique préétabli, pour obtenir des données d'eau et de sédiment d'une région cible, dans lequel le modèle mathématique est établi en utilisant des données historiques réellement mesurées, les données historiques réellement mesurées comprennent des données d'écoulement d'entrée d'eau et des données d'eau et de sédiment en route, les données d'écoulement d'entrée d'eau sont acquises par une station d'observation d'écoulement d'entrée d'eau en amont, les données d'eau et de sédiment en route sont acquises par une station d'observation en aval, et aucune station d'observation n'est agencée à l'intérieur de la région cible ; et
un module d'apprentissage, configuré pour : utiliser les données d'écoulement d'eau entrant et les données d'eau et de sédiment de la région cible en tant que données d'apprentissage, et effectuer l'apprentissage d'un modèle de réseau neuronal initial avec les données d'apprentissage, pour obtenir un modèle de prédiction d'eau et de sédiment de la région cible,
dans lequel le modèle mathématique comprend un modèle hydrodynamique, les données d'eau et de sédiment comprennent un niveau d'eau en section transversale et un débit d'écoulement en section transversale de la région cible, et
le modèle hydrodynamique est :

$$\frac{\partial Q}{\partial x} + B_T \frac{\partial Z}{\partial t} = q$$

$$\frac{\partial Q}{\partial t} + \frac{\partial}{\partial x}(\alpha \frac{Q^2}{A}) + gA \frac{\partial Z}{\partial x} + g \frac{|Q|Q}{c^2 AR} = 0 \quad ,$$

dans laquelle $x$ représente une coordonnée longitudinale de la région cible dans un cours de rivière, $t$ représente un intervalle de temps entre deux temps adjacents de détection, *Q* représente le débit d'écoulement en section transversale de la région cible, *Z* représente le niveau d'eau en section transversale de la région cible, $B_T$ représente une largeur de rivière équivalente de la région cible, *q* représente un débit d'écoulement d'entrée latéral d'une longueur de rivière unitaire, $\alpha$ représente un coefficient de correction hydrodynamique, *A* représente une superficie de section transversale de la région cible, *g* représente une accélération gravitationnelle, *C* représente le coefficient de Chézy, et *R* représente un rayon hydraulique de la région cible ;

le modèle mathématique comprend en outre un modèle de valeur de sédiment de charge en suspension, les données d'eau et de sédiment comprennent en outre une teneur en sédiment en section transversale de différents groupes de tailles de particules de sédiment à l'intérieur de la région cible,

le modèle de valeur de sédiment de charge en suspension comprend :

$$\frac{\partial QS_k}{\partial x} + \frac{\partial AS_k}{\partial t} + \alpha_k \omega_k B_T (S_k - S_{*k}) = 0 \quad ,$$

une équation de contrôle de transport de charge en suspension :

$$\rho' \frac{\partial A_s}{\partial t} = \alpha_k \omega_k B_T (S_k - S_{*k}) \quad ,$$

une équation de déformation d'affouillement et de dépôt de lit de rivière causée par la charge en suspension :

dans laquelle *Q* représente le débit d'écoulement en section transversale de la région cible, $S_k$ représente une teneur en sédiment en section transversale d'un k$^{\text{ième}}$ groupe de tailles de particules de sédiment à l'intérieur de la région cible, *x* représente la coordonnée longitudinale de la région cible dans le cours de rivière, *A* représente la superficie de section transversale de la région cible, *As* représente une superficie d'affouillement et de dépôt de la région cible, $S_{*k}$ représente une capacité de support de sédiment en section transversale du k$^{\text{ième}}$ groupe de tailles de particules de sédiment à l'intérieur de la région cible, $W_k$ et $\alpha_k$ représentent respectivement une vitesse de sédimentation et un coefficient de récupération de saturation du k$^{\text{ième}}$ groupe de tailles de particules de sédiment, $\rho'$ représente une masse volumique apparente à sec du sédiment, et $B_T$ représente la largeur de rivière équivalente de la région cible ;

ou,

le modèle mathématique comprend en outre un modèle de valeur de sédiment de charge de lit, et les données d'eau et de sédiment comprennent en outre un débit de transport de sédiment de la région cible ;

le modèle de valeur de sédiment de charge de lit comprend :

une équation de contrôle de transport de charge de lit : $G_b = G_b (U,Z,d,\cdots)$,

une équation de déformation d'affouillement et de dépôt de lit de rivière causée par la charge de lit :

$$\frac{\partial (G_b)}{\partial x} + \frac{\partial (\rho' A_b)}{\partial t} = 0 \quad ,$$

dans laquelle *G* représente un débit de transport de sédiment de la charge de lit, *U* représente une vitesse d'écoulement moyenne en section transversale à l'intérieur de la région cible, *Z* représente le niveau d'eau en section transversale de la région cible, *d* représente une taille de particules du sédiment, *x* représente la coordonnée longitudinale de la région cible dans le cours de rivière, *t* représente l'intervalle de temps entre deux temps adjacents de détection, $\rho'$ représente la masse volumique apparente à sec du sédiment, et $A_b$ représente la superficie d'affouillement et de dépôt de la région cible.

6. Support de stockage lisible par ordinateur, avec des instructions d'ordinateur stockées sur celui-ci, **caractérisé en ce que** les instructions d'ordinateur sont utilisées pour faire en sorte qu'un ordinateur réalise le procédé pour l'apprentissage d'un modèle de prédiction d'eau et de sédiment pour un réservoir selon l'une quelconque des revendications 1 à 3, ou, réalise le procédé pour prédire l'eau et le sédiment dans un réservoir selon la revendication 4.

Acquire inbound water flow data $\quad$ S11

Input the inbound water flow data into a preestablished mathematical model, to obtain water-and-sediment data of a target region, where the mathematical model is established by using historical actually-measured data, the historical actually-measured data includes water inflow data and on-way water-and-sediment data, the water inflow data is acquired by an upstream water inflow observation station, and the on-way water-and-sediment data is acquired by a downstream observation station $\quad$ S12

Use the inbound water flow data and the water-and-sediment data of the target region as training data, and train an initial neural network model with the training data, to obtain a water-and-sediment prediction model of the target region $\quad$ S13

FIG. 1

FIG. 2

FIG. 3

* True value     ——— Prediction result of a deep learning model

FIG. 4

* True value ———— Prediction result of a deep learning model

FIG. 5

Acquire real-time data collected by an upstream water inflow observation station —— S21

Input the real-time data into a pretrained water-and-sediment prediction model, to obtain predicted water-and-sediment data in a target region, where the water-and-sediment prediction model is obtained through training by using the method for training a water-and-sediment prediction model for a reservoir provided in the first aspect of the present invention —— S22

FIG. 6

Data collection module — 31

Training data acquisition module — 32

Training module — 33

FIG. 7

Real-time data collection module — 41

Prediction module — 42

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MANSOUR TALEBIZADEH et al.** *Water Resour Manage,* 2010, vol. 24, 1747-1761